**Europäisches Patentamt**

**European Patent Office**

**Office européen des brevets**

(19)

(11) Numéro de publication: **0 014 649**
**B1**

(12) # FASCICULE DE BREVET EUROPEEN

(45) Date de publication du fascicule de brevet:
**05.05.82**

(51) Int. Cl.³: **B 01 D 19/00**

(21) Numéro de dépôt: **80400163.4**

(22) Date de dépôt: **01.02.80**

(54) Dispositif de dégazage.

(30) Priorité: **06.02.79 FR 7903550**

(43) Date de publication de la demande:
**20.08.80 Bulletin 80/17**

(45) Mention de la délivrance du brevet:
**05.05.82 Bulletin 82/18**

(84) Etats contractants désignés:
**AT BE CH DE GB IT NL SE**

(56) Documents cités:
**DE-A-2438551**
**FR-A-1582568**
**FR-A-2012221**
**FR-A-2315971**
**GB-A-1127886**
**US-A-2349994**

(73) Titulaire: **CREUSOT-LOIRE, 42 rue d'Anjou, F-75008 Paris (FR)**

(72) Inventeur: **Pere, Gérard, 6 rue d'Essertenne, F-71670 Le Breuil (FR)**

(74) Mandataire: **Dupuy, Louis et al, CREUSOT-LOIRE 15 rue Pasquier, F-75383 Paris Cedex 8 (FR)**

ACTORUM AG.

## Dispositif de dégazage

La présente invention concerne un dégazeur, ou séparateur gaz-liquide, tel que, par exemple, un dégazeur situé en sortie d'un électrolyseur industriel.

Les dispositifs utilisés ordinairement pour effectuer le dégazage d'un liquide, par exemple pour dégazer l'anolyte et le catholyte en sortie d'une électrolyseur en vue de réinjection dans celui-ci de l'électrolyte dégazé, utilisent le principe de dégazage par ascension des bulles de gaz. Pour cela, on fait passer le liquide à dégazer dans un dégazeur constitué simplement d'un long tube horizontal. Au fur et à mesure de l'avancé du liquide dans ce tube, les bulles de gaz montent à la surface de ce liquide, de sorte que, si ce tube est suffisamment long, toutes les bulles se trouvent éliminées en sortie de celui-ci. De tels dispositifs, dans leur forme actuelle, conviennent parfaitement pour des électrolyseurs de faible puissance. Ils ne peuvent par contre pas convenir pour des électrolyseurs industriels car, pour une puissance de 20 MW par exemple, il serait nécessaire d'utiliser un cylindre dont la longueur atteindrait une centaine de mètres.

La présente invention concerne un dégazeur permettant de séparer les gaz du liquide, tel que l'électrolyte, sans que cet appareil ait des dimensions prohibitives. Ce dispositif est du type comportant une ou plusieurs piles de plateaux séparés par des espaces et placés dans un réservoir cylindrique horizontal présentant une entrée amont et une sortie aval de liquide à dégazer, caractérisé en ce que lesdits plateaux sont horizontaux et assemblés à des parois verticales de manière à définir plusieurs compartiments (23) superposés, chacun desdits compartiments possédant dans sa portion supérieure au moins une lumière (10) situé dans chaque paroi verticale et débouchant dans une des cheminées latérales (6) longeant les parois verticales de ladite ou desdites piles (17 à 22), et en ce qu'il comporte en outre dans chacun desdits compartiments (23), au moins un orifice d'entrée amont (5) et de sortie aval (26) de liquide, ainsi qu'un déflecteur vertical (3) couvrant l'ensemble desdits orifices d'entrée amont et placé à distance de ceux-ci de manière à obliger l'électrolyte à se diriger vers le haut.

L'invention sera mieux comprise à l'aide de la description suivante d'un exemple de réalisation d'un dégazeur destiné à équiper un électrolyseur industriel d'une puissance pouvant atteindre plusieurs dizaines de mégawatts, en référence aux dessins annexés dans lesquels:

la fig. 1 est une vue d'ensemble en élévation latérale du dispositif de l'invention;

la fig. 2 est une vue en bout du dispositif de l'invention, la partie de droite étant une demi-vue suivant la direction F de la fig. 1 et la partie gauche étant une demi-coupe suivant la ligne BB' de la fig. 1;

la fig. 3 est une vue partielle longitudinale de l'entrée amont d'une pile de plateaux équipant le dispositif de l'invention;

la fig. 4 est une coupe transversale suivant la ligne CC' de la fig. 3;

la fig. 5 est une coupe partielle longitudinale de la sortie aval de la pile de plateaux de la fig. 3.

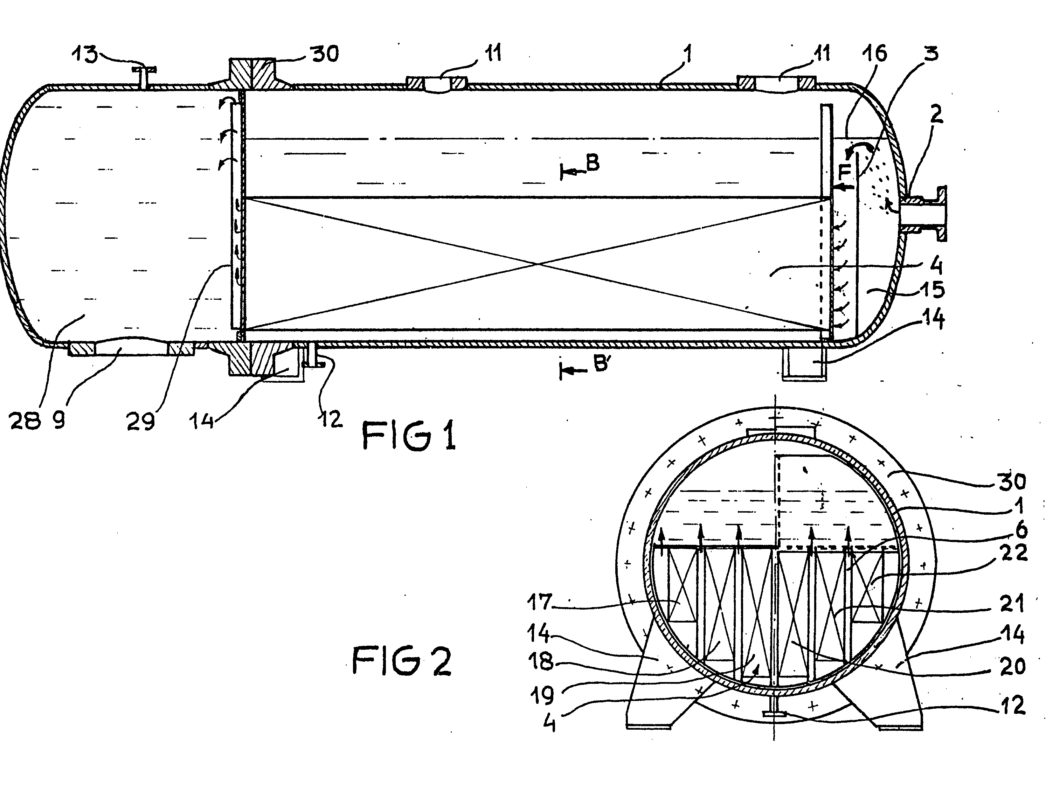

Sur la fig. 1, la référence 1 désigne le réservoir cylindrique formant le corps du dégazeur de l'invention, constitué de manière classique de deux parties assemblées à l'aide d'une bride 30, et possédant, de manière connue en soi, une entrée amont d'électrolyte 2, une sortie aval d'électrolyte 9, des orifices supérieurs de sortie des gaz séparés 11, un robinet de vidange 12, un robinet de purge 13, et reposant horizontalement sur le sol sur des pieds 14.

Comme on le voit sur le dessin, l'électrolyte pénètre tout d'abord dans un compartiment d'entrée 15 dans lequel il se heurte au déflecteur ou écran vertical 3 couvrant la partie inférieure de l'appareil jusqu'à un niveau situé en dessous de la surface 16 du liquide. Ce déflecteur ou écran 3 oblige ainsi le liquide à se diriger vers le haut, ce qui permet déjà d'effectuer le dégagement des bulles les plus grosses.

L'électrolyte passe ensuite dans un ensemble 4 de compartiments superposés qui sera maintenant décrit en détail en référence aux fig. 2 à 5.

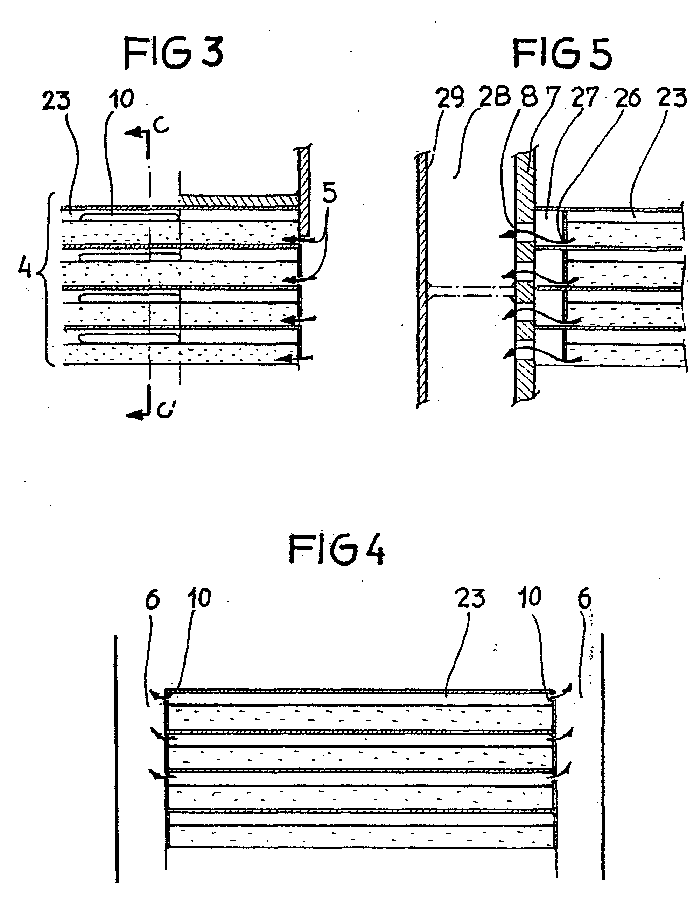

Cet ensemble comporte six piles (17 à 22) de plateaux parallèles superposés, séparés par des espaces et assemblés à des parois verticales de manière à définir, comme on le voit sur les fig. 3 à 5, un ensemble de compartiments séparés 23, chacune desdites piles étant longée par des séparations formant des cheminées verticales 6.

Chaque compartiment comporte en amont une fente horizontale d'entrée d'électrolyte 5 ainsi qu'en aval une première fente horizontale de sortie d'électrolyte 26, suivie d'un premier compartiment individuel de sortie 27 débouchant par un orifice calibré 8 dans une paroi 7 dans le compartiment commun de sortie 28 du cylindre 1. Avantageusement, en outre, le compartiment 28 comporte un second déflecteur ou écran vertical 29 semblable à l'écran 3 et servant d'organe de sécurité pour permettre le dégagement des bulles qui subsisteraient encore pour des causes fortuites.

Les orifices calibrés 8 permettent d'obtenir une bonne répartion du débit d'électrolyte dans les différents canaux et l'ensemble (26, 27, 8) permet d'éviter l'aspiration de gaz par effet vortex.

Chaque compartiment 23 comporte en outre dans les parois verticales une lumière horizontale 10 située sur chacun des côtés de la pile, vers le haut du compartiment, comme apparaissant sur les dessins, et débouchant dans chacune des cheminées 6. Les gaz séparés peuvent ainsi s'échapper par ces lumières et se diriger vers le haut de l'appareil où ils sont évacués définitivement par les orifices 11.

L'invention trouve son utilisation principale dans la production industrielle d'hydrogène et d'oxygène par électrolyse de l'eau.

**Revendications**

1. Dispositif destiné à effectuer le dégazage d'un liquide tel qu'un électrolyte en sortie d'un électrolyseur, du type comportant une ou plusieurs piles de plateaux séparés par des espaces et placés dans un réservoir cylindrique horizontal présentant une entrée amont et une sortie aval de liquide à dégazer, caractérisé en ce que lesdits plateaux sont horizontaux et assemblés à des parois verticales de manière à définir plusieurs compartiments (23) superposés, chacun desdits compartiments possédant dans sa portion supérieure au moins une lumière (10) située dans chaque paroi verticale et débouchant dans une des cheminées latérales (6) longeant les parois verticales de ladite ou desdites piles (17 à 22), et en ce qu'il comporte en outre, dans chacun desdits compartiments (23), au moins un orifice d'entrée amont (5) et de sortie aval (26) de liquide, ainsi qu'un déflecteur vertical (3) couvrant l'ensemble desdits orifices d'entrée amont et placé à distance de ceux-ci de manière à obliger l'électrolyte à se diriger vers le haut.

2. Dispositif de dégazage selon la revendication 1, caractérisé en ce que chacun des compartiments (23) débouche dans un premier compartiment individuel de sortie (27) débouchant lui-même, par un orifice calibré (8), dans un second compartiment commun de sortie (28).

3. Dispositif de dégazage selon l'une des revendications 1 ou 2, caractérisé en ce que son compartiment de sortie (28) commun aux différents compartiments superposés (23) de la ou desdites piles (4) comporte également un déflecteur vertical (29) couvrant l'ensemble desdits orifices sortie aval et placé à distance de ceux-ci de manière à obliger l'électrolyte à se diriger vers le haut.

**Claims**

1. A device intended for carrying out the degassing of a liquid such as an electrolyte leaving an electrolyser and of the type including one or more stacks of plates separated by spaces and placed in a horizontal cylindrical tank exhibiting an upstream inlet and a downstream outlet of liquid for degassing, characterized in that the said plates are horizontal and are assembled with vertical walls so as to define a number of superimposed compartments (23), each of the said compartments having in the upper portion of it at least one aperture (10) located in each vertical wall and opening into one of the side shafts (6) which follow the vertical walls of the said stack or stacks (17 to 22), and in that it includes in addition in each of the said compartments (23) at least one upstream inlet orifice (5) and at least one downstream outlet orifice (26) for liquid, as well as a vertical deflector (3) covering the whole of the said upstream inlet orifices and located at a distance from them so as to compel the electrolyte to be directed upwards.

2. A degassing device as in claim 1, characterized in that each of the compartments (23) opens into a first individual outlet compartment (27) which in turn opens through a gauged orifice (8) into a second common outlet compartment (28).

3. A degassing device as in claim 1 or 2, characterized in that its outlet compartment (28) common to the several superimposed compartments (23) of the stack or stacks (4) likewise includes a vertical deflector (29) covering the whole of the said downstream outlet orifices and located at a distance from them so as to compel the electrolyte to be directed upwards.

**Patentansprüche**

1. Vorrichtung zur Durchführung des Entgasens einer Flüssigkeit, wie eines Elektrolyten am Auslass einer Elektrolysevorrichtung, von der Art, die einen oder mehrere Stapel von Platten umfasst, die durch Abstände voneinander getrennt und in einem horizontalen zylindrischen Behälter angeordnet sind, der mit einem Einlass in Strömungsrichtung vor und einem Auslass in Strömungsrichtung nach der zu entgasenden Flüssigkeit versehen ist, dadurch gekennzeichnet, dass die genannten Platten horizontal angeordnet und mit vertikalen Wänden derart zusammengebaut sind, dass sie mehrere übereinander angeordnete Kammern (23) begrenzen, dass jede der Kammern in ihrem oberen Teil mit wenigstens einer Öffnung (10) versehen ist, die in jeder vertikalen Wand angeordnet ist und in einen der seitlichen Abzüge (6) mündet, die sich längs der vertikalen Wände des Stapels oder der Stapel (17-22) erstrecken, und dass sie weiters in jeder der Kammern (23) wenigstens eine Einlassöffnung (5) stromaufwärts und eine vertikale Ablenkplatte (3) besitzt, welche alle stromaufwärts angeordneten Einlassöffnungen abdeckt und in einem solchen Abstand von diesen angeordnet ist, dass der Elektrolyt gezwungen wird, aufwärts zu strömen.

2. Entgasungsvorrichtung nach Anspruch 1, dadurch gekennzeichnet, dass jede der Kammern (23) in eine erste, getrennte Auslasskammer (28) mündet, die ihrerseits durch eine kalibrierte Öffnung (8) in eine zweite, gemeinsame Auslasskammer (28) mündet.

3. Entgasungsvorrichtung nach einen der beiden Ansprüche 1 oder 2, dadurch gekennzeichnet, dass ihre Auslasskammer (28), die gemeinsam für die verschiedenen übereinander angeordneten Kammern (23) des Stapels oder der Stapel (4) dient, gleichfalls eine vertikale Ablenkplatte (29) aufweist, welche alle stromabwärts gelegenen Auslassöffnungen abdeckt und in einem solchen Abstand von diesen angeordnet ist, dass der Elektrolyt gezwungen wird, aufwärts zu strömen.

FIG 1

FIG 2

0 014 649

# FIG 3

# FIG 5

# FIG 4